(19) **Europäisches Patentamt / European Patent Office / Office européen des brevets**

(11) **EP 3 136 226 B1**

(12) **FASCICULE DE BREVET EUROPEEN**

(45) Date de publication et mention de la délivrance du brevet:
**04.04.2018 Bulletin 2018/14**

(51) Int Cl.:
**G06F 7/72** *(2006.01)*    **H04L 9/00** *(2006.01)*

(21) Numéro de dépôt: **16154852.4**

(22) Date de dépôt: **09.02.2016**

(54) **PROTECTION D'UN CALCUL D'EXPONENTIATION MODULAIRE**

SCHUTZ EINER BERECHNUNG VON MODULARER POTENZIERUNG

PROTECTION OF A MODULAR EXPONENTIATION CALCULATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.08.2015 FR 1557977**

(43) Date de publication de la demande:
**01.03.2017 Bulletin 2017/09**

(73) Titulaire: **STMICROELECTRONICS (ROUSSET) SAS**
**13790 Rousset (FR)**

(72) Inventeur: **TEGLIA, Yannick**
**13720 Belcodene (FR)**

(74) Mandataire: **Thibon, Laurent**
**Cabinet Beaumont**
**1, rue Champollion**
**38000 Grenoble (FR)**

(56) Documents cités:
- **JOYE M ET AL: "THE MONTGOMERY POWERING LADDER", CRYPTOGRAPHIC HARDWARE AND EMBEDDED SYSTEMS. INTERNATIONALWORKSHOP, XX, XX, 13 août 2002 (2002-08-13), pages 291-302, XP001160513,**
- **CHONG HEE KIM ET AL: "Safe-Error Attack on SPA-FA Resistant Exponentiations Using a HW Modular Multiplier", 29 novembre 2007 (2007-11-29), INFORMATION SECURITY AND CRYPTOLOGY - ICISC 2007; [LECTURE NOTES IN COMPUTER SCIENCE], SPRINGER BERLIN HEIDELBERG, BERLIN, HEIDELBERG, PAGE(S) 273 - 281, XP019083112, ISBN: 978-3-540-76787-9 * algorithm 3, 5 ***

Printed by Jouve, 75001 PARIS (FR)

**Description**

Domaine

La présente description concerne de façon générale les circuits électroniques et, plus particulièrement, les circuits exécutant des opérations d'exponentiation modulaire. La présente description concerne plus particulièrement la protection d'un tel calcul contre des attaques par injections de fautes.

Exposé de l'art antérieur

Dans de nombreuses applications, des circuits électroniques mettent en oeuvre des algorithmes de chiffrement, d'authentification, de calcul de signature, et plus généralement des algorithmes manipulant des données, dites secrètes, c'est-à-dire dont on souhaite réserver l'accès à certains utilisateurs ou circuits. Parmi ces algorithmes, certains utilisent des opérations d'exponentiation modulaire incluant tout ou partie de ces données secrètes.

De nombreuses méthodes, dites attaques, existent pour tenter de découvrir ou pirater ces données secrètes. Parmi ces attaques, des attaques dites par injections de fautes consistent à perturber le fonctionnement du circuit à des instants précis de l'exécution de l'opération. L'interprétation des conséquences de ces injections de fautes, sur le fonctionnement du circuit ou les résultats fournis, renseigne le pirate sur la donnée secrète.

Il existe un besoin d'améliorer la protection des données manipulées par des algorithmes exécutant des exponentiations modulaires contre des attaques par injections de fautes.

Il existe également un besoin de vérifier la sensibilité d'un circuit électronique à des attaques par injections de fautes.

Résumé

Un mode de réalisation pallie tout ou partie des inconvénients des procédés et circuits usuels de protection de données manipulées par des algorithmes exécutant des exponentiations modulaires contre des attaques par injections de fautes.

Un mode de réalisation propose un procédé de calcul d'une exponentiation modulaire par un circuit électronique qui pallie tout ou partie des inconvénients des procédés usuels.

Un mode de réalisation propose un procédé de vérification de la sensibilité d'un circuit électronique exécutant un calcul d'exponentiation modulaire à une attaque par injections de fautes.

Ainsi, un mode de réalisation prévoit un procédé de protection d'un calcul d'exponentiation modulaire exécuté par un circuit électronique utilisant un premier registre et un deuxième registre, comportant successivement, pour chaque bit de l'exposant :

une première étape de multiplication du contenu d'un des registres, choisi parmi le premier registre et le deuxième registre en fonction de l'état du bit de l'exposant, par le contenu de l'autre des premier et deuxième registres, en plaçant le résultat dans ledit un des registres ;

une deuxième étape d'élévation au carré du contenu dudit autre des registres en plaçant le résultat dans cet autre registre,

dans lequel le contenu dudit autre des registres est stocké dans un troisième registre avant la première étape et est restitué dans ledit autre des registres avant la deuxième étape.

Selon un mode de réalisation, ledit un des registres est le premier registre pour les bits de l'exposant à l'état 1.

Selon un mode de réalisation, le résultat de l'exponentiation modulaire est contenu dans ledit premier registre.

Selon un mode de réalisation, le procédé comporte les étapes suivantes :

initialiser le premier registre à la valeur 1 ;

initialiser le deuxième registre à la valeur du nombre à soumettre à l'exponentiation modulaire ;

successivement pour chaque bit de l'exposant :

si l'état du bit courant de l'exposant est 1 :

transférer le contenu du deuxième registre dans le troisième registre ;

multiplier le contenu du premier registre par celui du deuxième registre et stocker le résultat dans le premier registre ;

transférer le contenu du troisième registre dans le deuxième registre ;

élever au carré le contenu du deuxième registre et stocker le résultat dans le deuxième registre ; ou

si l'état du bit courant de l'exposant est 0 :

transférer le contenu du premier registre dans le troisième registre ;
multiplier le contenu du deuxième registre par celui du premier registre et stocker le résultat dans le deuxième registre ;
transférer le contenu du troisième registre dans le premier registre ;
élever au carré le contenu du premier registre et stocker le résultat dans le premier registre ; et

restituer le contenu du premier registre quand tous les bits de l'exposant ont été traités.

Selon un mode de réalisation, l'exponentiation modulaire est mise en oeuvre dans un algorithme RSA.

Un mode de réalisation prévoit un circuit électronique adapté à la mise en oeuvre du procédé.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, de façon schématique, un mode de réalisation d'un circuit électronique ;
la figure 2 illustre, sous forme de blocs, les étapes d'un calcul par la méthode de carré-multiplication ;
la figure 3 illustre un exemple de contenu de deux registres utilisés dans le calcul ;
la figure 4 illustre, sous forme de schéma bloc, les étapes d'une multiplication réalisée dans un accumulateur de Montgomery ;
la figure 5 représente, sous forme de blocs, un mode de mise en oeuvre d'une contremesure usuelle ; et
la figure 6 est un schéma bloc illustrant un mode de réalisation d'un procédé de protection d'un calcul d'exponentiation modulaire, réalisé dans un accumulateur de Montgomery.

Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les éléments utiles à la compréhension des modes de réalisation décrits ont été représentés et seront détaillés. En particulier, les applications des calculs exécutés ou celles des circuits les exécutant n'ont pas été détaillées, les modes de réalisation décrits étant compatibles avec les applications usuelles. Lorsque l'on fait référence aux termes "environ", "approximativement" ou "de l'ordre de", cela signifie à 10 % près, de préférence à 5 % près.

Des opérations d'exponentiation modulaire se retrouvent dans de nombreux algorithmes de chiffrement parmi lesquels, par exemple, les algorithmes connus sous les dénominations RSA, DSA, Diffie-Hellman, etc.

Une exponentiation modulaire consiste à calculer le résultat c de l'exponentiation d'un nombre b par un entier e (exposant) modulo n, c'est-à-dire appliquer la formule :

$$c = b^e \pmod{n}.$$

Le plus souvent :

le nombre b représente le nombre (ou une information représentative du nombre) que l'on souhaite chiffrer, authentifier, signer, etc. ; et
l'exposant e et le modulo n (le couple (e, n)) représentent la clé (ou des informations représentatives de la clé) de chiffrement, de vérification, de signature, etc.

Dans l'exemple d'application au chiffrement RSA, la clé de chiffrement est le couple (e, n) et la clé de déchiffrement est un couple (e', n), où n est le modulo de chiffrement et e' l'exposant de déchiffrement.

Le calcul de l'exponentiation modulaire par un circuit électronique (une machine d'états, un processeur exécutant le procédé sous forme de programme, un circuit logique programmable, etc.) s'effectue le plus souvent en appliquant une méthode dite de carré-multiplication (square-multiply).

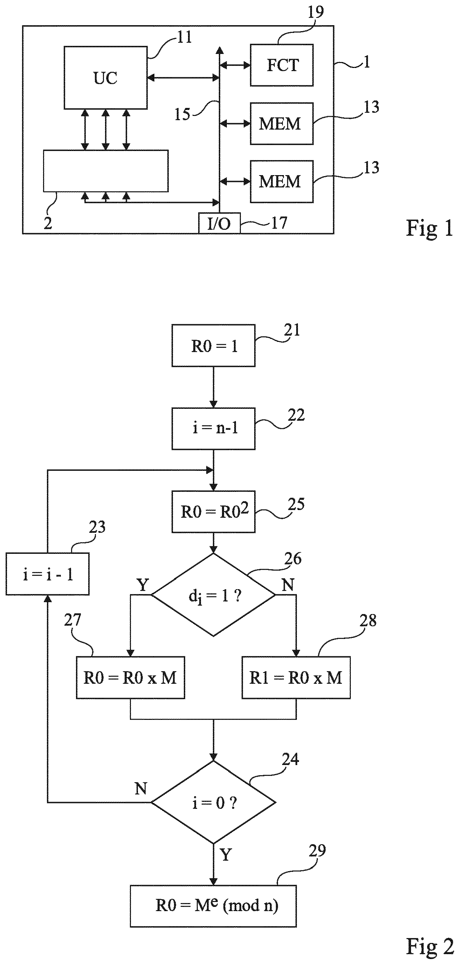

La figure 1 représente, de façon très schématique un circuit électronique 1 du type auquel s'appliquent les modes de réalisation qui vont être décrits.

Le circuit 1 comporte :

une entité de calcul 11 (UC), par exemple une machine d'états, un microprocesseur, un circuit logique programmable, etc., incluant ou utilisant des registres 2 représentés arbitrairement en figure 1 à l'extérieur de l'entité 11 ;
une ou plusieurs zones 13 (MEM) de stockage volatile et/ou non volatile pour stocker tout ou partie des données et clés ;
un ou plusieurs bus 15 de données, d'adresses et/ou de commandes entre les différents éléments internes au circuit 1 et une interface d'entrée-sortie 17 (I/O) de communication avec l'extérieur du circuit 1.

Le circuit 1 peut inclure divers autres circuits en fonction de l'application, symbolisés en figure 1 par un bloc 19 (FCT).

Le calcul d'une exponentiation modulaire selon la méthode de carré-multiplication exploite une décomposition polynomiale du calcul.

La figure 2 représente, sous forme de blocs, les étapes d'un calcul par la méthode de carré-multiplication, incluant une protection contre des attaques analysant la consommation (SPA) ou la durée d'exécution (timing attacks).

Le message, par exemple le nombre b, à soumettre à l'exponentiation modulaire est chargé dans un registre du circuit 1, noté M. L'exposant e est chargé dans un autre registre du circuit 1. On note $d_i$ chaque bit de l'exposant e, où i désigne le rang allant de 0 à n-1 (ou de 1 à n).

Le calcul utilise deux registres 2, notés arbitrairement R0 et R1 sur lesquels vont être effectuées les opérations.

Par la suite, pour simplifier, on confondra les registres et leur contenu, c'est-à-dire qu'en faisant référence à des opérations sur les registres, on entend sur leurs contenus.

Dans une première étape (bloc 21), le registre R0 est initialisé à 1 (R0=1).

On entame alors un calcul en boucle sur les bits de l'exposant e. Par exemple, un compteur i est initialisé à n-1 (bloc 22, i=n-1) et est décrémenté de 1 (bloc 23, i=i-1) à chaque traitement d'un bit $d_i$ de l'exposant tant que tous les bits n'ont pas été traités (bloc 24, i=0?).

A chaque itération, c'est-à-dire pour chaque bit $d_i$, on commence (bloc 25, R0=R0$^2$) par élever au carré le contenu du registre R0 en plaçant le résultat dans le registre R0. Puis, on effectue un test (bloc 26, $d_i$ =1?) sur la valeur du bit de l'exposant. Si le bit courant $d_i$ vaut 1 (sortie Y du bloc 26), le contenu du registre R0 est multiplié par le contenu du registre M (bloc 27, R0=R0*M) et le résultat est placé dans le registre R0. Si le bit courant $d_i$ vaut 0 (sortie N du bloc 26), on effectue une opération de masquage, inutile pour le calcul lui-même, en plaçant le résultat de la multiplication du contenu du registre R0 par le contenu du registre M dans le registre R1 (bloc 28, R1=R0*M).

Tant que tous les bits de l'exposant n'ont pas été traités (sortie N du bloc 24), on décrémente le compteur i et on revient à l'étape 25. Une fois que tous les bits de l'exposant ont été traités (sortie Y du bloc 24), le registre R0 contient le résultat de l'exponentiation modulaire (bloc 29, R0=M$^e$ (mod n)), c'est-à-dire la valeur c = b$^e$ (mod n).

Le calcul illustré par la figure 2 peut s'écrire également de la façon suivante :

```
R0=1 (étape 21)
      Pour i=n-1 à 0 (bloc 22, sortie N du bloc 24, bloc 23) :
            R0=R02 ou R0*R0 (bloc 25)
            Si di=1 (sortie Y du bloc 26)
                R0=R0*M (bloc 27)
            Sinon (sortie N du bloc 26)
                R1=R0*M (bloc 28)
      Fin de boucle (sortie Y du bloc 24)
      Retourner R0 (bloc 29).
```

L'étape 28, qui n'est pas prise en compte dans le résultat du calcul, permet de protéger le calcul contre des attaques par analyse de la consommation (SPA ou Simple Power Analysis) du circuit en exécutant le même nombre de calculs et le même type de calcul quel que soit l'état du bit de l'exposant.

Toutefois, certaines attaques par injections de fautes s'avèrent efficaces contre le calcul de la figure 2. En particulier, il est désormais possible de focaliser une attaque sur une étape de calcul précise.

Par exemple, en injectant une faute au moment de l'étape de multiplication R0*M, c'est-à-dire en perturbant le résultat de cette étape (en changeant la valeur d'au moins un bit), si le bit de l'exposant est à 1, cela aura un effet sur le résultat. Si, par contre, le bit de l'exposant vaut 0, comme le résultat faussé est stocké dans le registre R1 qui n'a pas d'effet sur le résultat final (valeur finale du registre R0), ce dernier n'est pas modifié. Par conséquent, selon que le résultat final est ou non affecté, l'attaquant en déduit l'état du bit de l'exposant.

Ce type d'attaque est connu sous le nom "C-Safe Error Attack".

Pour contrer ce type d'attaque, on a déjà proposé d'utiliser le contenu des registres R0 et R1 dans le résultat final. Une telle technique consiste à exécuter le calcul suivant :

```
R0=1
R1=M
Pour i=n-1 à 0:
        Si di=1
                R0=R0*R1
                R1=R12
        Sinon
                R1=R0*R1
                R0=R02
Fin de boucle
Retourner R0.
```

Ainsi, le résultat final est toujours modifié en cas d'attaque sur l'opération R0*R1.

Toutefois, une faiblesse de cette méthode a été mise en évidence dans une attaque connue sous la dénomination "M-Safe Error Attack". Cette attaque consiste à focaliser l'attaque sur le multiplicateur (dans l'exemple ci-dessus R1) lors de la multiplication R0*R1.

Cette attaque exploite la façon dont les multiplications sont effectuées dans le circuit électronique. On utilise généralement une technique dite d'accumulateur de Montgomery ou "Montgomery Ladder".

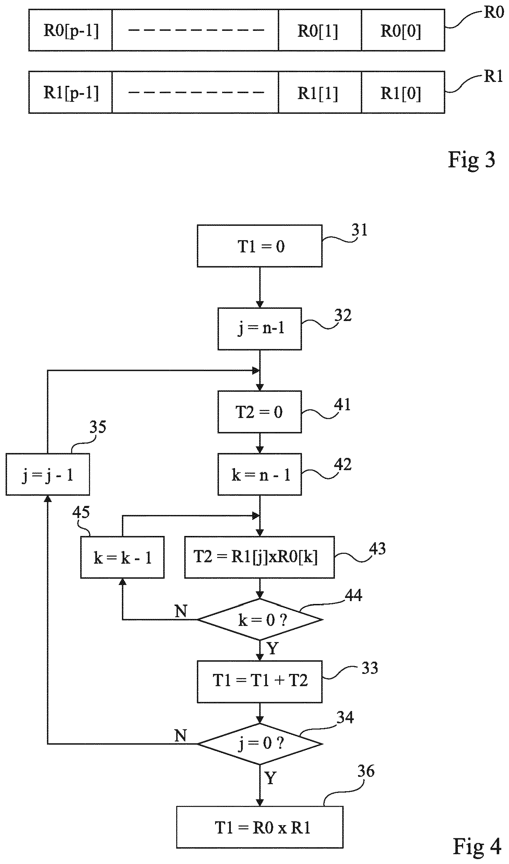

La figure 3 représente, sous forme de blocs, un exemple de registres R0 et R1 et leurs contenus respectifs.

Chaque registre comporte un nombre p de bits, respectivement R0[p-1], ..., R0[2], R0[1], R0[0] et R1[p-1], ..., R1[2], R1[1], R1[0].

L'opération de multiplication R0*R1 consiste à multiplier successivement chaque mot (d'au moins un bit) du premier terme R0 (le multiplicande) par tous les mots (d'au moins un bit) individuellement du deuxième terme R1 (le multiplicateur) dans un premier registre et de cumuler les résultats pour chaque mot du premier terme dans un autre registre.

La figure 4 illustre, sous forme de schéma bloc, les étapes d'une telle multiplication. Pour simplifier, on suppose ci-dessous des mots de un bit mais tout ce qui est décrit se transpose à une granularité par mot.

On commence par initialiser un registre T1 à 0 (bloc 31, T1=0). Puis, pour chaque bit du registre R1, on initialise (bloc 41, T2=0) un registre T2 d'un bit et on multiplie successivement le bit courant R1[j] du registre R1 par tous les bits R0[k] du registre R0.

Par exemple, un premier compteur j est initialisé avec la valeur n-1 (bloc 32, j=n-1). Pour chaque valeur de j, le registre T2 est initialisé à 0 (bloc 41). Puis, un deuxième compteur k est initialisé avec la valeur n-1 (bloc 42, k=n-1). Le bit courant R0[k] est multiplié par la valeur du bit R1[j] et le résultat est stocké dans le registre T2 (bloc 43, T2=R1[j]*R0[k])). Tant que tous les bits du registre R0 n'ont pas été traités (sortie N du bloc 44, k=0 ?), c'est-à-dire tant que le compteur k n'a pas atteint la valeur 0, le compteur k est décrémenté (bloc 45, k=k-1) et on revient à l'étape 43 pour écraser le contenu du registre T2 avec le nouveau résultat. Une fois tous les bits du registre R0 traités (sortie Y du bloc 44), le contenu du registre T2 est additionné au contenu du registre T1 (bloc 33, T1=T1+T2) et le résultat est cumulé dans le registre T1. Les étapes 41 à 45 sont reproduites pour tous les bits du registre R1. Tant que tous les bits du registre R1 n'ont pas été traités (sortie N du bloc 34, j=0 ?) c'est-à-dire tant que le compteur j n'a pas atteint la valeur 0, le compteur j est décrémenté (bloc 35, j=j-1) et on revient à l'étape 41. Une fois tous les bits du registre R1 traités (sortie Y du bloc 34), la multiplication est terminée et le registre T1 contient (bloc 36, T1=R0*R1) le résultat R0*R1.

Le calcul illustré par la figure 4 peut s'écrire également de la façon suivante :

```
T1=0 (étape 31)
Pour j=n-1 à 0 (étapes 32, 34 (sortie N), 35) :
      T2=0 (étape 41)
      Pour k=k-1 à 0 (étapes 42, 44 (sortie N), 45) :
            T2=R1[j]*R0[k] (étape 43)
      Fin de boucle (sortie Y du bloc 44)
      T1=T1+T2 (étape 33)
Fin de boucle (sortie Y du bloc 34)
Retourner T1 (étape 36).
```

Selon l'état du bit (di) de l'exposant, la valeur de T1 comme résultat de la multiplication R0*R1 est soit retournée dans le registre R0 ($d_i$=1), soit dans le registre R1 ($d_i$=0).

L'attaque M-Safe Error consiste à diriger l'attaque sur l'étape de multiplication 43, c'est-à-dire sur un des bits R1[j] lors de l'opération 43. En perturbant ce bit, on perturbe la valeur du registre T2, donc celle du registre T1. Selon l'état du bit di de l'exposant, le contenu du registre T1 se retrouve dans le registre R0 ou dans le registre R1. Si le bit de l'exposant vaut 1, l'erreur est alors propagée au registre R0 qui véhicule le résultat final. Si par contre le bit de l'exposant vaut 0, le fait de stoker le contenu du registre T1 dans le registre R1 va, dans certains cas, "effacer" l'erreur et celle-ci n'aura pas d'effet sur le résultat final. En jouant plusieurs fois l'attaque sur le même bit de l'exposant, soit l'attaque influe à chaque fois sur le résultat et on peut en déduire que le bit de l'exposant vaut 1, soit elle n'influe que pour une partie des attaques et on peut en déduire que le bit de l'exposant vaut 0.

De préférence, pour rendre l'attaque plus efficace, il faut au moins attaquer la dernière "sous" multiplication, c'est-à-dire dans l'exemple de la figure 4, perturber la valeur du bit R1[0].

Par ailleurs, dans la mesure où l'attaque M-Safe Error se concentre sur le bit de l'exposant, elle doit être jouée pour chaque bit de l'exposant.

Une solution pour pallier ce type d'attaque est d'inverser le premier terme de la multiplication, c'est-à-dire calculer R0=R0*R1 ou R1=R1*R0 en fonction de la valeur du bit de l'exposant. Dans ce cas, quelle que soit la valeur du bit de l'exposant, l'attaque va perturber le résultat final et ne fournit donc pas de renseignement. Cette solution est décrite dans l'article "The Montgomery Powering Ladder" de Marc Joye et Sung-Ming Yen (CHES 2002, LNCS 2523, pp 291-302, 2003).

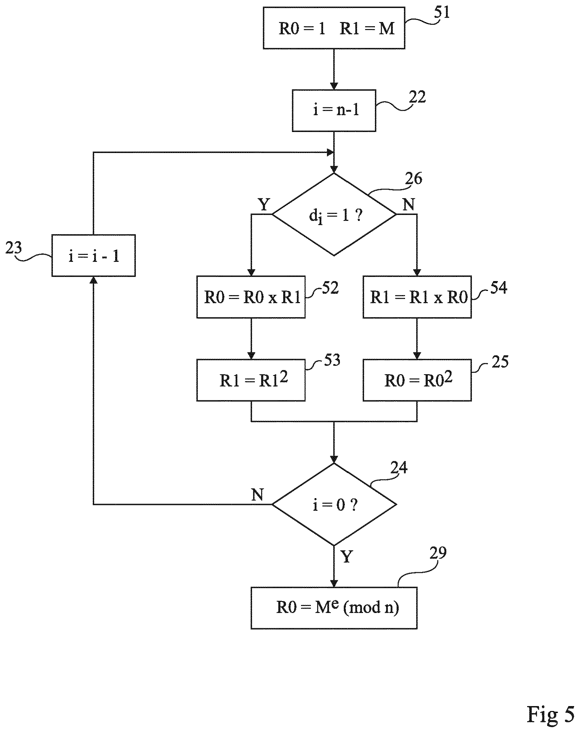

La figure 5 représente, sous forme de blocs, un mode de mise en oeuvre d'une telle contremesure.

Dans une première étape (bloc 51, R0=1 ; R1=M), on initialise les registres R0 et R1, respectivement avec les valeurs 1 et M.

On entame alors un calcul en boucle sur les bits de l'exposant e. Par exemple, un compteur i est initialisé à n-1 (bloc 22, i=n-1) et est décrémenté de 1 (bloc 23, i=i-1) à chaque traitement d'un bit di de l'exposant tant que tous les bits n'ont pas été traités (bloc 24, i=0 ?).

A chaque itération, on effectue un test (bloc 26, di =1 ?) sur la valeur du bit de l'exposant.

Si le bit courant di vaut 1 (sortie Y du bloc 26), le contenu du registre R0 est multiplié par le contenu du registre R1 (bloc 52, R0=R0*R1) et le résultat est placé dans le registre R0. Puis (bloc 53, R1=R1$^2$), le contenu du registre R1 est élevé au carré en plaçant le résultat dans le registre R1.

Si, à l'inverse, le bit courant di vaut 0 (sortie N du bloc 26), le contenu du registre R1 est multiplié par le contenu du registre R0 (bloc 54, R1=R1*R0) et le résultat est placé dans le registre R1. Puis (bloc 25, R0=R0$^2$), le contenu du registre R0 est élevé au carré en plaçant le résultat dans le registre R0.

A la fin (sortie Y du bloc 24), le registre R0 contient (bloc 29, R0=M$^e$ (mod n)) le résultat final de l'exponentiation modulaire.

Grâce à l'inversion des rôles entre le multiplicateur et le multiplicande aux étapes 52 et 54 en fonction du bit de l'exposant, l'attaque sur la sous multiplication (étape 43, figure 4) est susceptible de toujours perturber le résultat final. L'attaque M-Safe Error devient donc inopérante.

Cependant si l'attaque ne vise pas le multiplicateur mais toujours l'opérande R0, alors, l'exécution du calcul par le circuit électronique redevient vulnérable. En effet, à partir du moment où il est possible de viser le registre R0, la vulnérabilité se situe au niveau de la dernière itération, c'est-à-dire de la dernière étape 52 ou 54. En effet, à cette dernière étape, l'attaque sur le registre R0 aura un effet sur le résultat final si le bit de l'exposant est à l'état 1 et pas dans le cas inverse. Par conséquent, en effectuant deux fois le calcul, une fois sans perturbation et une fois avec, on est en mesure de déterminer l'état du dernier bit de l'exposant.

Une façon simple est d'attaquer le registre R0 à chaque itération. Toutefois, si l'attaquant est en mesure de détecter le séquencement des itérations, une attaque sur la dernière itération suffit.

Pour déterminer lequel des deux registres 2 joue le rôle du registre R0, il suffit d'attaquer les deux registres à la fin de la multiplication (étape 52 ou 54). Cela permet d'identifier le registre qui rend le résultat sensible à l'attaque. Il suffit alors de focaliser l'attaque sur ce registre pendant de nombreuses exécutions du calcul pour être en mesure de percer le secret (la valeur de la clé).

On notera que cette attaque opère aussi si l'attaque se focalise sur la valeur du registre R1 lors de l'itération de l'avant dernier bit de l'exposant.

L'attaque ci-dessus est efficace si la clé (la valeur de l'exposant) n'est pas modifiée par le circuit à chaque exécution du calcul.

Pour vérifier si le circuit est sensible à une injection de faute selon le procédé ci-dessus, on vérifie si le résultat diffère entre plusieurs exécutions du calcul avec les mêmes opérandes. Dans l'affirmative, le circuit est sensible.

L'inventeur propose une contremesure à une telle attaque en tirant profit du fait que la valeur de l'exposant e reste la même pendant de nombreuses itérations. C'est en pratique le cas et cela engendre la faiblesse susmentionnée.

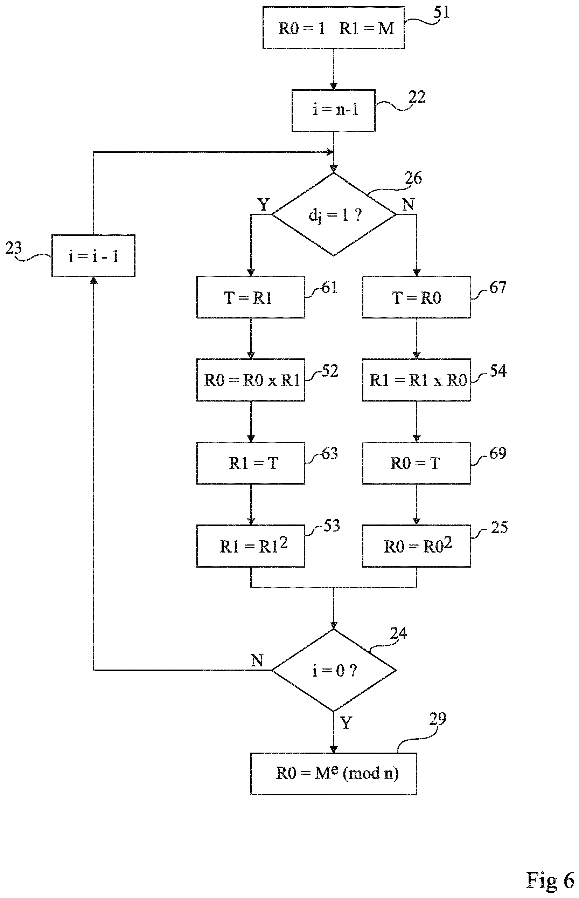

La figure 6 est un schéma bloc illustrant un mode de réalisation d'un procédé de protection d'un calcul d'exponentiation modulaire, basé sur un calcul mettant en oeuvre la méthode dite de "Montgomery Ladder".

Selon ce procédé, on utilise un registre 2 supplémentaire, noté T, comme variable tout le long du calcul.

Dans une première étape (bloc 51, R0=1 ; R1=M), on initialise par exemple les registres R0 et R1, respectivement avec les valeurs 1 et M. En fait, il suffit de stocker le dernier mot du registre qui va être multiplié. La valeur initiale contenue dans le registre T n'a pas d'importance.

On entame alors un calcul en boucle sur les bits de l'exposant e. Par exemple, un compteur i est initialisé à n-1 (bloc 22, i=n-1) et est décrémenté de 1 (bloc 23, i=i-1) à chaque traitement d'un bit di de l'exposant tant que tous les bits n'ont pas été traités (bloc 24, i=0 ?).

A chaque itération, on effectue un test (bloc 26, di =1 ?) sur la valeur du bit de l'exposant.

Si le bit courant di vaut 1 (sortie Y du bloc 26), le contenu du registre R1 (résultant de l'itération précédente) est transféré dans le registre T (bloc 61, T=R1). Cela revient à stoker temporairement, dans le registre T, le contenu du registre R1 issu de l'itération précédente. Puis, le contenu du registre R0 est multiplié par le contenu du registre R1 (bloc 52, R0=R0*R1) et le résultat est placé dans le registre R0. Puis, le contenu du registre T est restitué au registre R1 (bloc 63, R1=T). Enfin (bloc 53, R1=R1$^2$), le contenu du registre R1 est élevé au carré en plaçant le résultat dans le registre R1.

Si, à l'inverse, le bit courant di vaut 0 (sortie N du bloc 26), le contenu du registre R0 (résultant de l'itération précédente) est transféré dans le registre T (bloc 67, T=R0). Cela revient à stoker temporairement, dans le registre T, le contenu du registre R0 issu de l'itération précédente. Puis, le contenu du registre R1 est multiplié par le contenu du registre R1 (bloc 54, R1=R1*R0) et le résultat est placé dans le registre R1. Puis, le contenu du registre T est restitué au registre R1 (bloc 69, R0=T). Enfin (bloc 25, R0=R0$^2$), le contenu du registre R0 est élevé au carré en plaçant le résultat dans le registre R0.

A la fin (bloc 29), le registre R0 contient le résultat final de l'exponentiation modulaire, c'est-à-dire que R0=M$^e$ (mod n).

Ainsi, même si une attaque est opérée sur le registre R0 (ou R1) à l'intérieur de l'étape 33 ou 37, lors de la dernière itération de l'étape 43 (figure 4), le fait d'utiliser le registre temporaire T et de recharger le registre R0 (ou R1) avant l'opération d'élévation au carré, rend une telle attaque inopérante.

Le procédé décrit en relation avec la figure 6 revient à exécuter le calcul suivant :

```
R0=1 (bloc 51)
R1=M (bloc 51)
Pour i=n-1 à 0 (bloc 22, sortie N du bloc 24, bloc 23) :
      Si di=1 (sortie Y du bloc 26)
            T=R1 (bloc 61)
            R0=R0*R1 (bloc 52)
            R1=T (bloc 63)
            R1=R12 (bloc 53)
      Sinon (sortie N du bloc 26)
            T=R0 (bloc 67)
            R1=R1*R0 (bloc 54)
            R0=T (bloc 69)
            R0=R02 (bloc 25)
Fin de boucle (sortie Y du bloc 24)
Retourner R0 (bloc 29).
```

Selon un premier aspect, on souhaite évaluer la résistance d'un circuit électronique à une attaque telle que décrite ci-dessus. Pour cela, l'attaque est exécutée et on détecte si elle est ou non efficace.

Selon un autre aspect, on souhaite protéger l'exécution d'un calcul d'exponentiation modulaire contre cette attaque. La mise en oeuvre du procédé de vérification de la sensibilité à l'attaque permet en outre de vérifier si la contremesure décrite en relation avec la figure 6 est implémentée ou non par le circuit électronique.

Divers modes de réalisation ont été décrits. Diverses variantes et modifications apparaîtront à l'homme de l'art. En particulier, la dénomination des registres est arbitraire et pourra être inversée. Enfin, la mise en oeuvre pratique des modes de réalisation qui ont été décrits est à la portée de l'homme du métier à partir des indications fonctionnelles données ci-dessus.

**Revendications**

1. Procédé de protection d'un calcul d'exponentiation modulaire exécuté par un circuit électronique utilisant un premier registre (R0) et un deuxième registre (R1), comportant successivement, pour chaque bit de l'exposant (e) :

   une première étape (52, 54) de multiplication du contenu d'un des registres, choisi parmi le premier registre et le deuxième registre en fonction de l'état du bit de l'exposant, par le contenu de l'autre des premier et deuxième registres, en plaçant le résultat dans ledit un des registres ;

une deuxième étape (53, 25) d'élévation au carré du contenu dudit autre des registres en plaçant le résultat dans cet autre registre,

dans lequel le contenu dudit autre des registres est stocké dans un troisième registre (T) avant la première étape et est restitué dans ledit autre des registres avant la deuxième étape.

**2.** Procédé selon la revendication 1, dans lequel ledit un des registres est le premier registre (R0) pour les bits de l'exposant (e) à l'état 1.

**3.** Procédé selon la revendication 2, dans lequel le résultat de l'exponentiation modulaire est contenu dans ledit premier registre (R0).

**4.** Procédé selon l'une quelconque des revendications 1 à 3, comportant les étapes suivantes :

initialiser (51) le premier registre (R0) à la valeur 1 ;
initialiser (51) le deuxième registre (R1) à la valeur du nombre (M) à soumettre à l'exponentiation modulaire ;
successivement pour chaque bit de l'exposant (e) :

si l'état du bit courant de l'exposant est 1 :

transférer (61) le contenu du deuxième registre dans le troisième registre (T) ;
multiplier (52) le contenu du premier registre par celui du deuxième registre et stocker le résultat dans le premier registre ;
transférer (63) le contenu du troisième registre dans le deuxième registre ;
élever au carré (53) le contenu du deuxième registre et stocker le résultat dans le deuxième registre ; ou

si l'état du bit courant de l'exposant est 0 :

transférer (67) le contenu du premier registre dans le troisième registre ;
multiplier (54) le contenu du deuxième registre par celui du premier registre et stocker le résultat dans le deuxième registre ;
transférer (69) le contenu du troisième registre dans le premier registre ;
élever au carré (25) le contenu du premier registre et stocker le résultat dans le premier registre ; et

restituer (29) le contenu du premier registre quand tous les bits de l'exposant ont été traités.

**5.** Procédé selon l'une quelconque des revendications 1 à 4, dans lequel l'exponentiation modulaire est mise en oeuvre dans un algorithme RSA.

**6.** Circuit électronique (1) adapté à la mise en oeuvre du procédé selon l'une quelconque des revendications 1 à 5.

## Patentansprüche

**1.** Verfahren zum Schutz einer modularen Potenzierungsberechnung, ausgeführt durch eine elektronische Schaltung, die ein erstes Register (R0) und ein zweites Register (R1) verwendet, die aufeinanderfolgend für jedes Bit des Exponenten (e) Folgendes aufweist:

einen ersten Schritt (52, 54) des Multiplizierens des Inhalts eines der Register, ausgewählt aus dem ersten Register und dem zweiten Register gemäß dem Zustand des Bits des Exponenten, mit dem Inhalt des anderen der ersten und zweiten Register und Anordnen des Ergebnisses in den einen der Register;
einen zweiten Schritt (53, 25) des Quadrierens des Inhalts des anderen der Register und Anordnen des Ergebnisses in diesem anderen Register,
wobei der Inhalt des anderen der Register in einem dritten Register (T) vor dem ersten Schritt gespeichert und in dem anderen der Register vor dem zweiten Schritt wiederhergestellt wird.

**2.** Verfahren nach Anspruch 1, wobei das eine der Register das erste Register (R0) ist für die Bits des Exponenten (e) im Zustand 1.

3. Verfahren nach Anspruch 2, wobei das Ergebnis der modularen Potenzierung in dem ersten Register (R0) enthalten ist.

4. Verfahren nach einem der Ansprüche 1 bis 3, das folgende Schritte aufweist:

Initialisieren (51) des ersten Registers (R0) auf den Wert 1;
Initialisieren (51) des zweiten Registers (R1) auf den Wert der Zahl (M), die der modularen Potenzierung ausgesetzt wird;
aufeinanderfolgend für jedes Bit des Exponenten (e);
wenn der Zustand des aktuellen Bits des Exponenten 1 ist:

Transferieren (61) des Inhalts des zweiten Registers in das dritte Register (T);
Multiplizieren (52) des Inhalts des ersten Registers mit dem des zweiten Registers und Speichern des Ergebnisses in dem ersten Register;
Transferieren (63) des Inhalts des dritten Registers in das zweite Register;
Quadrieren (53) des Inhalts des zweiten Registers und Speichern des Ergebnisses in dem zweiten Register; oder
wenn der Zustand des aktuellen Bits des Exponenten 0 ist:

Transferieren (67) des Inhalts des ersten Registers in das dritte Register;
Multiplizieren (54) des Inhalts des zweiten Registers mit dem des ersten Registers und Speichern des Ergebnisses in dem zweiten Register;
Transferieren (69) des Inhalts des dritten Registers in das erste Register;
Quadrieren (25) des Inhalts des ersten Registers und Speichern des Ergebnisses in dem ersten Register; und
Wiederherstellen (29) des Inhalts des ersten Registers, wenn alle der Bits des Exponenten verarbeitet worden sind.

5. Verfahren nach einem der Ansprüche 1 bis 4, wobei die modulare Potenzierung in einem RSA-Algorithmus implementiert ist.

6. Eine elektronische Schaltung (1), die geeignet ist, das Verfahren nach einem der Ansprüche 1 bis 5 zu implementieren.

**Claims**

1. A method of protecting a modular exponentiation calculation executed by an electronic circuit using a first register (R0) and a second register (R1), successively comprising, for each bit of the exponent (e):

a first step (52, 54) of multiplying the content of one of the registers, selected from among the first register and the second register according to the state of the bit of the exponent, by the content of the other one of the first and second registers, and placing the result in said one of the registers;
a second step (53, 25) of squaring the content of said other one of the registers and placing the result in this other register,
wherein the content of said other one of the registers is stored in a third register (T) before the first step and is restored in said other one of the registers before the second step.

2. The method of claim 1, wherein said one of the registers is the first register (R0) for the bits of the exponent (e) at state 1.

3. The method of claim 2, wherein the result of the modular exponentiation is contained in said first register (R0).

4. The method of any of claims 1 to 3, comprising the steps of:

initializing (51) the first register (R0) to value 1;
initializing (51) the second register (R1) to the value of the number (M) to be submitted to the modular exponentiation;

successively for each bit of the exponent (e);

if the state of the current bit of the exponent is 1:

transferring (61) the content of the second register into the third register (T);

multiplying (52) the content of the first register by that of the second register and storing the result in the first register;

transferring (63) the content of the third register into the second register;

squaring (53) the content of the second register and storing the result in the second register; or

if the state of the current bit of the exponent is 0:

transferring (67) the content of the first register into the third register;

multiplying (54) the content of the second register by that of the first register and storing the result in the second register;

transferring (69) the content of the third register into the fist register;

squaring (25) the content of the first register and storing the result in the first register; and

restoring (29) the content of the first register when all the bits of the exponent have been processed.

5. The method of any of claims 1 to 4, wherein the modular exponentiation is implemented in a RSA algorithm.

6. An electronic circuit (1) capable of implementing the method of any of claims 1 to 5.

Fig 1

Fig 2

R0 = 1 — 21

i = n-1 — 22

R0 = R0$^2$ — 25

i = i - 1 — 23

$d_i$ = 1 ? — 26

Y              N

R0 = R0 x M — 27

R1 = R0 x M — 28

i = 0 ? — 24

N

Y

R0 = M$^e$ (mod n) — 29

UC — 11

FCT — 19

1

15

MEM — 13

MEM — 13

2

I/O — 17

| R0[p-1] | — — — — — — — — — | R0[1] | R0[0] | R0 |
| R1[p-1] | — — — — — — — — — | R1[1] | R1[0] | R1 |

Fig 3

```
            ┌─────────────┐
            │   T1 = 0    │─── 31
            └─────────────┘
                   │
                   ▼
            ┌─────────────┐
            │  j = n-1    │─── 32
            └─────────────┘
                   │
                   ▼
            ┌─────────────┐
            │   T2 = 0    │─── 41
            └─────────────┘
                   │
   ┌─────────┐     ▼
   │ j = j-1 │  ┌─────────────┐
35─│         │  │  k = n - 1  │─── 42
   └─────────┘  └─────────────┘
                   │
      ┌─────────┐  ▼
  45  │ k = k-1 │ ┌──────────────────┐
 ─────│         │ │ T2 = R1[j]xR0[k] │─── 43
      └─────────┘ └──────────────────┘
                   │
            N    ◇ k = 0 ? ◇─── 44
          ──────◇          ◇
                   │ Y
                   ▼
            ┌─────────────┐
            │ T1 = T1 + T2│─── 33
            └─────────────┘
                   │
            N    ◇ j = 0 ? ◇─── 34
          ──────◇          ◇
                   │ Y
                   ▼
            ┌─────────────┐
            │ T1 = R0 x R1│─── 36
            └─────────────┘
```

Fig 4

$$R0 = 1 \quad R1 = M \quad \text{—} \quad 51$$

$$i = n-1 \quad \text{—} \quad 22$$

$$d_i = 1 \text{ ?} \quad \text{—} \quad 26$$

Y     N

$$23 \text{—} \quad i = i - 1$$

$$R0 = R0 \times R1 \quad \text{—} \quad 52$$

$$R1 = R1 \times R0 \quad \text{—} \quad 54$$

$$R1 = R1^2 \quad \text{—} \quad 53$$

$$R0 = R0^2 \quad \text{—} \quad 25$$

$$i = 0 \text{ ?} \quad \text{—} \quad 24$$

N

Y

$$R0 = M^e \pmod{n} \quad \text{—} \quad 29$$

Fig 5

Fig 6

**RÉFÉRENCES CITÉES DANS LA DESCRIPTION**

**Littérature non-brevet citée dans la description**

- **MARC JOYE ; SUNG-MING YEN.** The Montgomery Powering Ladder. *CHES,* 2002, vol. 2523, 291-302